# FASCICULE DE BREVET EUROPEEN

(11) **EP 0 883 709 B1**
(45) Date de publication et mention de la délivrance du brevet: **08.03.2000**
(21) Numéro de dépôt: 97906248.6
(22) Date de dépôt: 25.02.1997
(51) Int. Cl.: D06F 75/20, D06F 75/38

(54) **SEMELLE DE FER A REPASSER A VAPEUR COMPORTANT DES ZONES DISTINCTES DE VAPORISATION ET DE SECHAGE**
DAMPFBÜGELEISENSOHLE MIT VERSCHIEDENEN BEREICHEN ZUM DÄMPFEN UND ZUM TROCKNEN
STEAM IRON SOLEPLATE WITH SEPARATE STEAMING AND DRYING AREAS

(30) Priorité: 26.02.1996 FR 9602697
(43) Date de publication de la demande: 16.12.1998
(73) Titulaire: SEB S.A., 69130 Ecully (FR)
(72) Inventeur: LOUISON, Bernard, F-69340 Francheville (FR); DAULASIM, Denis, F-69100 Villeurbanne (FR)
(86) Numéro de dépôt international: FR9700332
(87) Numéro de publication internationale: WO9731146

(56) Documents cités:
- EP-A- 0 457 689
- DE-C- 4 103 794
- US-A- 2 750 691

## Description

### DOMAINE TECHNIQUE

La présente invention est relative à une semelle de fer à repasser à vapeur comportant des zones distinctes de vaporisation puis de séchage.

### TECHNIQUE ANTERIEURE

A l'origine, le repassage s'effectuait simplement avec de la chaleur et de l'action mécanique. Ce fut le temps des pierres à repasser jusqu'à celui des fers secs. Cependant, le besoin d'efficacité et l'observation pratique de phénomènes naturels avaient amené certaines ménagères à interposer, entre le fer sec et le linge, un tissu imprégné d'eau pour améliorer la qualité et la rapidité du repassage. Ce fut la consécration de l'utilisation de la "pattemouille".

Avec l'avènement des technologies d'obtention rapide de la vapeur furent créés les fers dits "à vapeur" qui permettaient, grâce à ce calo-vecteur presque idéal, de réaliser l'humidification de la fibre en même temps que son chauffage dans un temps extrêmement rapide, pratiquement en même temps que l'application de l'action mécanique de défroissage.

On s'est rendu compte par la suite que cette injection de vapeur laissait toutefois une forte humidité résiduelle dans le tissu. Il est en effet facile de constater en cours de repassage qu'une pièce de linge, considérée comme repassée et qui en fin de pliage est posée avant rangement, conserve une humidité résiduelle importante et demande parfois un temps de séchage en "pile" non négligeable avant de pouvoir être stockée.

Le brevet DE 452 559 est relatif à un fer à repasser à vapeur dont la semelle inférieure se divise en une première zone avant plane de vaporisation comprenant une pluralité d'orifices d'éjection de vapeur, et en une seconde zone arrière de repassage normalement obstruée par une semelle fermant une chambre d'air surchauffé. A partir de la constatation que cette semelle arrière maintient l'humidité dans le tissu, il est proposé de la retirer pour ne plus laisser que deux rouleaux transversaux de repassage, l'air surchauffé assurant alors directement un séchage simultané.

Toutefois, la première semelle étant légèrement inclinée vers l'avant, la mise à plat du linge ne peut être qu'approximative. Surtout, le chauffage du tissu par le seul brassage d'air surchauffé s'avère trop lent pour réaliser un séchage efficace.

Le document SU 1 796 718 divulgue une semelle de fer à repasser munie de quatre canaux de sortie de vapeur arrangés en chevron avec les pointes orientées vers l'avant et débouchant sur les bords latéraux. Ainsi, la vaporisation est limitée au niveau des canaux, le surplus de vapeur étant naturellement évacué sur les côtés, laissant ainsi le reste de la semelle lisse dédié au repassage et séchage.

Toutefois, la forme en chevron des canaux fait que la vapeur n'a pas vraiment le temps de faire son travail d'humidification lors d'une avancée du fer, cette vapeur étant en fait évacuée trop rapidement vers l'extérieur. De plus, ces chevrons étant répartis sur l'ensemble de la semelle, le séchage est à peine réalisé qu'une nouvelle humidification est effectuée.

Une semelle de fer selon le préambule de la revendication 1 est connue du document EP 621 365.

Plus particulièrement, le document EP 621 365 divulgue une semelle de fer à repasser à vapeur comportant, de sa pointe à son talon, une première plage de vaporisation comportant des orifices latéraux et des orifices centraux de sortie de vapeur alimentés par deux chambres distinctes ; suivie d'une première plage de séchage dépourvue d'orifices de vapeur et s'étendant transversalement entre les bords latéraux de la semelle ; puis suivie d'une deuxième plage de vaporisation s'étendant également transversalement entre les bords latéraux et dans laquelle débouchent des orifices latéraux de sortie de vapeur alimentés par la première chambre ainsi que des orifices centraux alimentés à partir des orifices latéraux par des canaux longitudinaux et transversaux ; cette deuxième plage de vaporisation étant elle-même suivie d'une deuxième plage de séchage dépourvue d'orifices de sortie de vapeur et s'étendant aussi sur toute la surface restante postérieure de la semelle.

Selon le titulaire, cette répartition de plages de séchage et de vaporisation évite également, lors du repassage, une humidification trop importante inutile du linge, et permet d'y effectuer une double action assurant ainsi un meilleur défroissage : le linge est dans un premier temps étiré puis vaporisé, ensuite séché, et dans un deuxième temps à nouveau vaporisé puis séché.

Toutefois, dans la réalité, les plages lisses de chauffage s'avèrent trop petites et trop proches des plages de vaporisation pour vraiment constater un séchage exhaustif et de fait on réhumidifie une zone imprégnée de la première humidification. On observe alors que trop de plis restent "arrondis" et tiennent trop peu de temps.

### EXPOSE DE L'INVENTION

Un premier but de la présente invention est d'optimiser le repassage, notamment en améliorant sensiblement la fixation de la planéité ou de la forme des plis voulus par un séchage nettement plus efficace.

Ces buts sont atteints par une semelle de fer à repasser à vapeur divisée en au moins une zone avant de vaporisation comprenant une pluralité d'orifices d'éjection de vapeur, et en au moins une zone arrière de séchage dépourvue d'orifices d'éjection de vapeur, la zone de séchage présentant une ou plusieurs rainures, caractérisée en ce qu'un ensemble de rainures se présente dans la zone de séchage sous la forme d'un réseau de sillons définissant une trame de pavés en relief.

Après une étude approfondie du mécanisme du repassage, on s'est rendu compte que la fixation de la planéité ou de la forme du pli voulu s'effectue sous l'effet de la chaleur évacuant l'humidité par chauffage du tissu. Or, on a constaté que de la vapeur s'accumule au centre de la semelle puis se déplace vers l'arrière avec l'avance du fer pour former un coussin pneumatique. Ce coussin a alors tendance à légèrement lever cette zone arrière de séchage, gênant ainsi le transfert des calories vers le linge tout en maintenant un taux d'humidité élevé.

La fonction première de ces rainures est alors de limiter l'effet de cette accumulation de vapeur entre les surfaces en contact, et ce en la contenant principalement dans son volume. La surface arrière de chauffage peut alors revenir en contact complet avec le tissu pour un chauffage efficace.

Selon l'invention, un ensemble de rainures se présente sous la forme d'un réseau de sillons définissant une trame de pavés en relief, ce réseau contenant une majeure partie du coussin de vapeur qu'il évacue par les bords. De préférence, les sillons présentent une largeur comprise entre 0,1 et 2 mm pour une profondeur comprise entre 0,005 et 1 mm. De préférence également, l'espacement des sillons est tel que la surface des pavés est comprise entre 0,5 et 50 mm².

Grâce à ce réseau de sillons, le coussin de vapeur gênant est très rapidement éparpillé. De plus, la rugosité de la surface de séchage induite par ces sillons ajoute un effet mécanique d'étirement et de lissage de la fibre au moment de l'évaporation de l'humidité résiduelle, laissant par cet effet un linge parfaitement plat.

Selon un mode de réalisation avantageux, le réseau de sillons définit une trame de pavés circulaires ou polygonaux, ces configurations permettant une circulation particulièrement fluide de la vapeur vers l'arrière puis hors de la semelle.

Utilement, la surface des pavés en contact avec le tissu est structurée sous forme de reliefs submillimétriques permettant de conjuguer au niveau macroscopique une action mécanique sur la fibre, avec une augmentation de la surface de contact améliorant d'autant la transmission thermique de la semelle chaude vers le tissu.

En alternative ou en combinaison, des rainures se présentent sous la forme de canaux d'évacuation de vapeur de largeur comprise entre 1 et 10 mm pour une profondeur comprise entre 0,1 et 1 mm. Avantageusement, les canaux sont obliques du centre vers l'arrière de la semelle où ils débouchent.

Ces canaux permettent de collecter la vapeur, notamment celle éparpillée au sein du réseau, pour l'évacuer le plus rapidement possible vers l'arrière et ainsi prévenir toute formation de coussin pneumatique indésirée. Cet agencement oblique vers l'arrière facilite notablement l'évacuation de la vapeur lors de l'avance du fer.

Utilement, une cavité centrale est ménagée au milieu de la frontière entre la zone avant de vaporisation et la zone arrière de séchage, et des canaux mettent en liaison cette cavité centrale avec les bords latéraux ou arrière de la zone de séchage.

La présence de canaux dans cette zone de chauffage permet à la vapeur de circuler dans le sens de la surpression centrale vers la mise à l'air sur les bords ou sur l'arrière. De ce fait, la partie de tissu en correspondance contient moins de vapeur résiduelle et donc moins d'eau de recondensation.

Avantageusement, la zone de séchage forme entre 2/3 et 1/3 de la semelle. Ainsi, lors d'une progression normale du fer vers l'avant, le tissu est sensiblement autant séché qu'il n'a été humidifié.

Un autre but de la présente invention est une semelle de fer à repasser dont la structure de la zone de vaporisation est conçue en relation avec celle de la zone de séchage de telle sorte à optimiser la synergie des fonctions respectives lors du repassage.

Ce but est réalisé du fait qu'en combinaison avec une zone arrière de séchage présentant une ou plusieurs rainures d'évacuation de vapeur, la zone avant de vaporisation comprend un réseau de reliefs longitudinaux d'écrasement de fibre r et de guidage de la vapeur.

Lors de l'étude approfondie du mécanisme du repassage, on s'est rendu compte que l'essentiel du défroissage et de la mise à plat de la fibre s'effectue en majorité par la zone avant de vaporisation, et ce d'autant plus que cette zone est la plus humide et la plus chaude. Surtout, la forme pointue et l'angle d'attaque aigu de la semelle sur le linge dans cette zone créent un "effet d'arête" permettant une action mécanique d'aplanissement dans le sens d'avancement du fer sur le linge.

Les reliefs longitudinaux additionnels ménagés sous cette zone avant multiplient d'abord cet effet d'arête en fonctionnant à la manière de "couteaux à filet arrondi" de lissage. Cette amplification est d'autant plus prononcée que ces reliefs guident la vapeur d'humidification et de chauffage pour une répartition contrôlée sur la totalité du linge, et que ces reliefs sont également chauffés par cette vapeur guidée. Finalement, cette vapeur est conduite de manière prédéterminée dans la seconde zone arrière où elle est volontairement éparpillée dans des sillons et canaux d'éjection pour permettre d'assurer un contact fort entre les surfaces de pavés chauffants et le tissu.

On connaît certes des documents EP 378 479 et EP 457 689 des fers à repasser dont la semelle émaillée est complétée de minces reliefs rectilignes longitudinaux et parallèles entre eux. Ces reliefs sont réalisés soit par dépôt sérigraphique de bandes d'émail, soit par matriçage et/ou usinage puis revêtement d'émail. Toutefois, ces reliefs longitudinaux ont essentiellement été conçus pour permettre de réduire la surface de contact de la semelle avec les textiles à repasser, et donc de réduire le coefficient de frottement, ce qui améliore la "glisse" du fer. Tout au plus, on a incidemment constaté que ces bandes créent simultanément des canaux de quelques microns de profondeur assurant une relative diffusion longitudinale de la vapeur dans l'ensemble de la semelle. Par contre, la possibilité de multiplier l'effet d'arête par des reliefs plus accentués pour une meilleure mise à plat n'y est nullement entrevue.

Selon un mode de réalisation préféré, la hauteur des reliefs longitudinaux est comprise entre 0,05 et 0,5 mm à partir d'une base située entre 0 et 0,5 mm au-dessus du plan de contact de la zone de séchage avec un tissu à repasser, ce plan de contact étant pris comme plan de référence.

En fonction du mode de réalisation de la semelle et de son usage futur particulier, on peut soit établir une base élevée avec l'extrémité inférieure des reliefs à niveau avec le plan de contact de séchage pour plutôt privilégier une fonction de canalisation de ces reliefs, soit établir une base à niveau avec le plan de contact et des reliefs protubérants pour privilégier une fonction d'effet d'arête mécanique, soit une base légèrement élevée avec des reliefs suffisamment hauts pour combiner les deux fonctions.

Utilement, les reliefs longitudinaux peuvent avoir une forme ondulée pour augmenter l'effet d'arête transversal par rapport au sens d'avance normal de la semelle, et ralentir la progression de la vapeur par un effet de chicane pour une humidification effective avec moins de vapeur.

Lorsque la répartition des orifices de sortie de vapeur se fait selon deux arcs opposés longeant chacun un côté de la pointe de la semelle puis revenant vers le centre, il s'est avéré préférable de réaliser une frontière en V entre la première zone avant munie de reliefs, et la seconde zone arrière à pavés. Dans cette configuration, les languettes de pavés de chauffage latérales assurent un séchage minimum du linge quand bien même la semelle est avancée de travers.

Lorsque la répartition des orifices de sortie de vapeur se fait selon deux arcs opposés longeant chacun seulement un côté de la pointe de la semelle, il s'est avéré utile de réaliser une frontière en V inversé ou en W entre la première zone avant munie de reliefs, et la seconde zone arrière à pavés. La languette centrale entame alors la phase de chauffage à un stade précoce pour optimiser d'autant le séchage.

Il convient de noter qu'un fer à repasser est normalement considéré comme un produit de grand public devant être commercialisé à bon marché. Les coûts importants envisageables a priori pour réaliser une semelle complexe en trois dimensions ne pouvaient alors être que dissuasifs. Toutefois, certaines techniques d'obtention de reliefs par moulage d'aluminium sous pression, ou par matriçage de plaques d'inox, voire par dépôt sérigraphique pour de faibles reliefs, permettent de maintenir ces coûts à un niveau raisonnable au vu de l'augmentation remarquable de l'efficacité du repassage. Cette efficacité est d'autant plus prononcée que les zones avant et arrière sont simultanément structurées selon leurs propres caractéristiques tenant compte d'une synergie des fonctions, alors que le coût additionnel pour façonner simultanément une deuxième zone est faible dès lors que l'on utilise la même technique que pour structurer la première.

### DESCRIPTION SOMMAIRE DES DESSINS

L'invention sera mieux comprise à l'étude de modes de réalisation pris à titre nullement limitatif et illustrés dans les figures annexées dans lesquelles :
- la figure 1 est une vue schématique d'un premier mode de réalisation d'une semelle de fer à repasser présentant deux zones distinctes de vaporisation puis de séchage,
- la figure 2 est une vue en coupe partielle schématique de la zone arrière de séchage de la semelle de la figure 1,
- la figure 3 est une vue agrandie de la figure 2,
- la figure 4 est une vue schématique d'un second mode de réalisation d'une semelle,
- la figure 5 est une vue en coupe partielle schématique de la zone avant de vaporisation de la semelle de la figure 4,
- la figure 6 est une vue en coupe partielle schématique de la zone arrière de séchage de la semelle de la figure 4, et
- la figure 7 est une vue schématique d'un troisième mode de réalisation d'une semelle.

### MEILLEURE MANIERE DE REALISER L'INVENTION

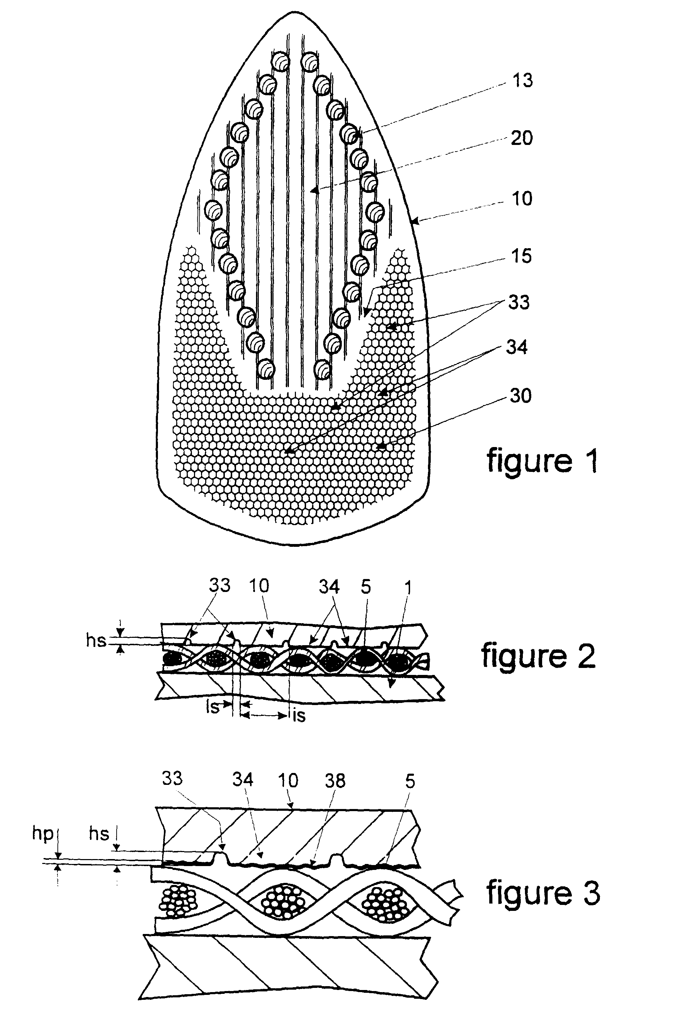

Sur la figure 1 est illustrée la face extérieure d'une semelle 10 de fer à repasser à vapeur comprenant une première zone avant 20 de vaporisation et une seconde zone arrière 30 de séchage.

Dans ce premier exemple, la configuration de la zone avant 20 se rapproche de celle des semelles de fers actuelles. Cette semelle se présente ici sous la forme d'un plan de chauffe sensiblement en losange à bords et angles arrondis, et dans lequel débouche une pluralité d'orifices 13 de sortie de vapeur. Cet ensemble d'orifices est agencé selon deux arcs en vis-à-vis, chacun des arcs commençant par longer les bords de la pointe avant jusqu'à la partie médiane, puis revenant progressivement vers le centre, ces arcs étant symétriques par rapport à l'axe longitudinal.

Les bords latéraux de cette semelle 10 présentent un angle aigu avec la verticale pour, en combinaison avec la pointe avant, former des arêtes utilisées pour aplanir le tissu à repasser.

La surface de cette zone avant peut être en acier inox lisse ou en aluminium recouvert d'émail. Dans cet exemple illustré, on a formé deux minces reliefs longitudinaux rectilignes par dépôt en sérigraphie de couches d'émail complémentaires, ces reliefs favorisant la glisse de cette zone.

Plus particulièrement, selon l'invention, cette semelle 10 est complétée par une zone arrière 30 dédiée au séchage, dont l'état et la morphologie de surface sont étudiés à la fois pour multiplier l'effet d'arête et pour augmenter la surface d'échange réelle entre les fibres du tissu et le matériau de la semelle.

Plus précisément, cette surface de semelle est composée d'un ensemble de pavés hexagonaux 34 en relief séparés par des sillons 33 destinés à limiter l'accumulation de vapeur entre les surfaces en contact de semelle et de tissu. Comme mieux illustré sur la figure 2, la section des sillons 33 présente une largeur "Is" comprise entre 0,1 et 2 mm et une profondeur "hs" comprise entre 0,005 et 1 mm. Ces sillons définissent des pavés 34 de largeur "is" de l'ordre de 0,8 à 8 mm soit une surface de contact avec le tissu 5 variant entre 0,5 et 50 mm².

De plus, et comme mieux visible sur la figure 3, l'état de surface de la partie des pavés destiné à être en contact avec le tissu 5 à plat sur la table 1 est lui-même retravaillé pour constituer un ensemble de mini-reliefs 38 arrondis submillimétriques. L'épaisseur "hp" de ces mini-reliefs est comprise entre le dixième et la moitié de la profondeur "hs" des sillons 33.

Tel qu'illustré, la frontière 15 entre la zone avant 20 et la zone arrière 30 se présente sensiblement sous la forme d'un V, c'est-à-dire que la zone arrière 30 comprend deux languettes latérales bordant la seconde moitié arrière de la zone 20. La superficie de la partie avant 20 est ici à peu près équivalente à celle de la partie arrière 30.

Lors de l'utilisation d'un fer à repasser muni d'une semelle 10, la zone avant 20 permet, grâce à sa surface chaude et à l'éjection de vapeur, de chauffer et d'humidifier les fibres du tissu permettant, avec l'action combinée d'écrasement mécanique effectuée par les bords aigus, de réaliser un défroissage et une mise à plat du tissu. De par l'avance progressive du fer, une zone de tissu défroissée et sa vapeur environnante se retrouvent sous la zone arrière 30 à pavés. Cette vapeur s'éparpille alors parmi les sillons 33 faisant que les faces externes des pavés 34 se trouvent bien en contact avec le tissu pour y transmettre effectivement des calories par conduction. De plus, les mini-reliefs 38 des pavés 34 permettent de conjuguer au niveau microscopique une action mécanique de lissage sur la fibre avec une surface de contact encore plus importante améliorant d'autant la transmission thermique de cette dernière. Simultanément, la vapeur circulant au sein des sillons 33 s'échappe sur les côtés ouverts du réseau.

La semelle 10 est normalement prévue pour être avancée selon son axe longitudinal médian de telle sorte qu'une zone de tissu à repasser rencontre d'abord la zone avant 20 de vaporisation, puis la zone arrière 30 de séchage, séquence logique du repassage. En l'occurrence, la forme en V de la frontière 15 fait que, dans le cas où la semelle 10 est déplacée de travers, une zone de tissu voit toujours passer la zone 20 de vaporisation, mais également quand même une portion de zone 30 de séchage constituée par l'une des languettes latérales.

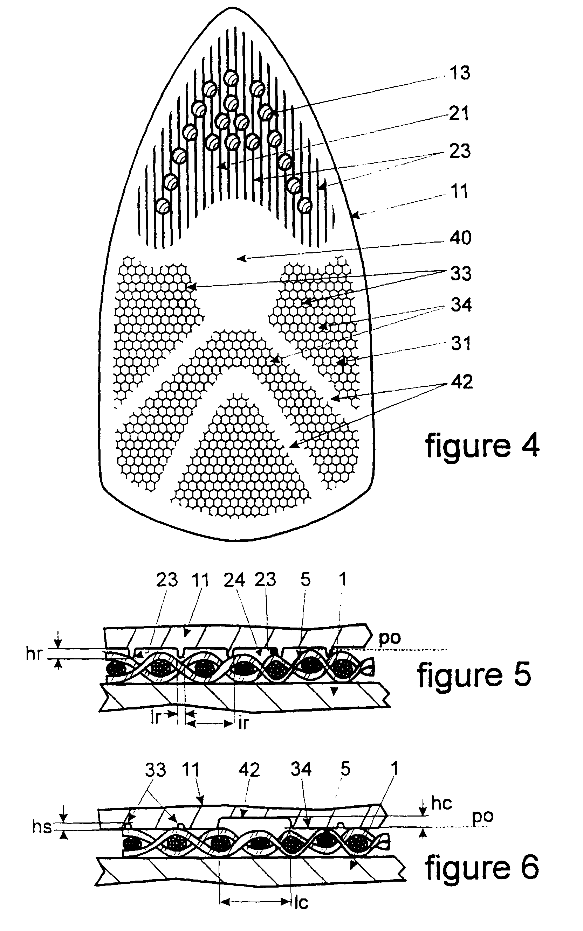

Sur la figure 4 est illustré un second mode de réalisation d'une semelle 11 d'un fer à repasser plus élaboré dans la mesure où la zone avant 21 est complétée de reliefs 23 longilignes accentués en combinaison avec une zone arrière 31 également à réseau de sillons 33 définissant des pavés 34.

Cette zone avant 21 comprend d'abord une pluralité d'orifices 13 de sortie de vapeur agencée d'une part selon deux arcs longeant les bords de la pointe avant de la semelle 11, et d'autre part selon un groupe central situé proche de la réunion avant des deux arcs.

Surtout et comme mieux visible sur la figure 5, cette zone avant 21 est munie de lignes en relief 23 rectilignes orientées ici dans le sens de l'avance normale de la semelle. Ces reliefs continus, ou partiellement interrompus, multiplient d'autant l'effet d'arête utilisé pour l'écrasement de la fibre lors de son défroissage. Ces reliefs favorisent simultanément une circulation de la vapeur de l'avant vers l'arrière, notamment par guidage dans des couloirs 24 définis latéralement par chaque paire de reliefs adjacents, ainsi que par la surface de semelle et de tissu 5 à plat sur la table 1 située entre ces deux reliefs adjacents.

Comme mieux visible sur la figure 5, ces reliefs 23 sont relativement accentués, c'est-à-dire que leur hauteur "hr" est comprise entre 0,05 et 0,5 mm. Ces reliefs peuvent présenter une section rectangulaire ou triangulaire orientée vers le bas, leur tranche inférieure étant toutefois arrondie pour éviter tout risque d'usure prématurée du tissu. L'intervalle "ir" de ces reliefs peut être de l'ordre de 1 à 10 mm.

En considérant comme plan de référence "po" de la semelle 11, le plan de contact des pavés 34 de la zone arrière 31 avec le tissu 5, tel qu'illustré sur la figure 6, la base des reliefs 23 peut être soit à niveau avec ce plan "po" pour une fonction première d'arête de lissage, soit être légèrement surélevée pour obtenir plutôt une fonction première de couloir de guidage de la vapeur.

En référence aux figures 4 et 6, la zone arrière 31 comprend d'abord un réseau de sillons 33 définissant une trame de pavés hexagonaux 34 identiques à ceux décrits précédemment en relation avec la figure 1. Toutefois, dans cette version, cette zone arrière 31 est complétée de canaux 42 en chevron avec la pointe orientée vers l'avant, c'est-à-dire comprenant des branches latérales obliques orientées de la partie centrale vers les bords latéraux ou arrière de la semelle. Ces canaux sont exécutés en creux par rapport au plan de référence "po" avec une section de passage rectangulaire ou trapézoïdale, de profondeur "hc" pouvant aller de 0,1 à 1 mm et de largeur "Ic" comprise entre 1 à 10 mm. Cet agencement de canaux est organisé pour que la collecte et l'évacuation de vapeur pendant l'avancement du fer sur le tissu 5 soient optimum, aucune zone n'échappant au passage de ces canaux, puis au passage de parties de chauffage seulement structurées par des sillons 33.

Comme mieux visible sur la figure 4, la zone à reliefs 21 constitue environ le tiers avant de la semelle 11, et une zone centrale lisse 40 est ménagée au milieu de la frontière entre la zone avant 21 et la zone arrière 31. Cette zone centrale 40, sensiblement circulaire, voire ovale dans le sens d'avancement de la semelle, donne à la zone avant 21 une forme en pointe de flèche. Cette zone 40 peut être au niveau du plan de référence "po" de contact des pavés 34 avec le tissu, ou légèrement en creux pour former une cavité.

Ces reliefs et sillons peuvent être obtenus par de nombreux moyens connus : frappe, dépôt sérigraphié ou tampographié, usinage, voire moulage, et ce simultanément ou séparément.

Lors de l'utilisation de cette semelle, la partie de tissu se situant sous la zone avant 21, humidifiée et chauffée par l'accumulation de vapeur dont la fuite vers les bords est limitée, est soumise à des effets mécaniques de frottement et de lissage amplifiés par l'importance des reliefs 23 longitudinaux. Dans cette zone, la hauteur des reliefs est telle que le contact avec le tissu est nullement affecté par l'épaisseur du coussin de vapeur engendré à ce niveau.

Cette quantité de vapeur ainsi dirigée d'avant en arrière se retrouve, lors de la progression du fer, accumulée vers le centre notamment au niveau de la zone 40, puis vers l'arrière de la semelle où va se créer un phénomène de "coussin de vapeur" tendant à décoller légèrement la semelle du tissu, ce décollement étant régulé auparavant par l'échappement latéral de la vapeur vers les bords de semelle.

Cette vapeur accumulée sous les parties centrale et arrière se trouve en surpression du fait d'au moins trois facteurs. Le premier est la présence de la vapeur résiduelle produite en première génération par expulsion hors des trous de vaporisation 13 dans la zone avant 21. Cette vapeur résiduelle comprend notamment le reste de vapeur qui n'a pas pu pénétrer le tissu du fait de la perte de charge occasionnée par la traversée du tissu ; ce phénomène appelé "contrepression" varie suivant que la surface sur laquelle on repasse est étanche ou grillagée. Un second facteur est la présence de vapeur de seconde génération, c'est-à-dire celle qui se crée par la surface chaude de la zone arrière revaporisant l'eau condensée dans les fibres du tissu à partir de la vapeur éjectée dans la zone avant. Cette production de vapeur s'ajoute à la précédente. Le troisième facteur est la pression d'appui de la ménagère sur le fer à repasser.

La présence du réseau de sillons 33 et surtout des canaux 42 dans la zone arrière 31 permet à cette importante vapeur de circuler dans le sens de la surpression centrale vers la mise à l'air libre sur les bords latéraux. De ce fait, la partie de tissu correspondante contient moins de vapeur résiduelle, donc moins d'eau de recondensation, et la surface des pavés 34 peut effectivement être en contact avec le tissu 5.

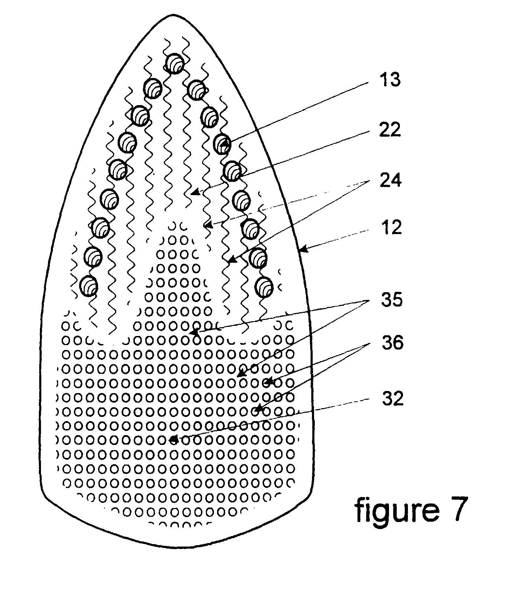

Sur la figure 7 est illustrée une troisième variante de semelle 12 de fer à repasser dont la zone avant 22 en forme de pointe de flèche est suivie d'une zone arrière 32 à pavés 36 présentant une languette centrale avançant au milieu de la zone avant 22, la frontière entre ces deux zones étant donc sous la forme d'un W. La superficie des zones 22 et 32 est ici sensiblement identique.

Dans cet exemple, les reliefs 24 de la zone avant ont une forme sinusoïdale ajoutant un effet d'arête de lissage transversal en plus du lissage longitudinal. Par ailleurs, les pavés 36 de la zone arrière sont ici circulaires, les sillons 35 se présentant alors sous la forme d'un quadrillage de motifs cruciformes à bras concaves. En l'occurrence, la superficie de ces sillons 35 est pratiquement identique à celle des pavés circulaires 36.

L'invention n'est nullement limitée strictement aux exemples de réalisation décrits précédemment, mais englobe de nombreuses modifications ou améliorations. Notamment, les reliefs de la zone avant peuvent être discontinus, par exemple, en se présentant sous la forme d'une pluralité de segments orientés à 45 degrés et imbriqués en quinconce présentant alors autant d'effets d'arête dans le sens longitudinal que transversal. En alternative, ces reliefs peuvent être des courbes orientées vers l'intérieur pour contenir la vapeur ou, à l'inverse, orientées vers l'extérieur pour éjecter très rapidement cette vapeur bien avant la zone arrière de séchage.

Outre les formes circulaires ou hexagonales illustrées des pavés de séchage, on peut également envisager d'autres formes telles que losanges ou à flans alternativement concaves et convexes ou autres exemples de formes d'ores et déjà utilisées pour le carrelage.

On peut également envisager que les zones avant de vaporisation et arrière de séchage soient chauffées par des résistances électriques individuelles régulées à des températures de consigne distinctes.

### POSSIBILITES D'APPLICATION INDUSTRIELLE

L'invention trouve son application dans le domaine des fers à vapeur.

## Revendications

1. Semelle de fer (10,11,12) à repasser à vapeur divisée en au moins une zone avant de vaporisation (20,21,22) comprenant une pluralité d'orifices d'éjection de vapeur (13), et en au moins une zone arrière de séchage (30,31,32) dépourvue d'orifices d'éjection de vapeur, la zone de séchage présentant une ou plusieurs rainures (33, 35, 42), caractérisée en ce qu'un ensemble de rainures se présente, dans la zone de séchage (30, 31, 32), sous la forme d'un réseau de sillons (33,35) définissant une trame de pavés en relief (34,36).

2. Semelle selon la revendication 1, caractérisée en ce que les sillons présentent une largeur comprise entre 0,1 et 2 mm pour une profondeur comprise entre 0,005 et 1 mm.

3. Semelle selon la revendication 1 ou 2, caractérisée en ce que la surface des pavés (34,36) est comprise entre 0,5 et 50 mm².

4. Semelle selon l'une des revendications 1 à 3, caractérisée en ce que le réseau de sillons définit une trame de pavés circulaires (36), polygonaux (34).

5. Semelle selon l'une des revendications 1 à 4, caractérisée en ce que la surface des pavés (34,36) est structurée sous forme de reliefs submillimétriques (38).

6. Semelle selon l'une des revendications 1 à 5, caractérisée en ce que des rainures se présentent sous la forme de canaux (42) d'évacuation de vapeur de largeur comprise entre 1 et 10 mm pour une profondeur comprise entre 0,1 et 1 mm.

7. Semelle selon la revendication 6, caractérisée en ce que les canaux (42) sont obliques du centre vers l'arrière de la semelle où ils débouchent.

8. Semelle selon la revendication 7, caractérisée en ce qu'une cavité centrale (40) est ménagée au milieu de la frontière entre la zone avant de vaporisation (21) et la zone arrière de séchage (31), et en ce que des canaux (42) mettent en liaison cette cavité centrale avec les bords latéraux ou arrière de la zone de séchage.

9. Semelle selon l'une des revendications précédentes, caractérisée en ce que la zone de séchage (30,31,32) forme entre 2/3 et 1/3 de la semelle (10,11,12).

10. Semelle selon l'une des revendications précédentes, caractérisée en ce que la zone avant de vaporisation (20,21,22) comprend un réseau de reliefs (23,24) longitudinaux d'écrasement de fibre et de guidage de la vapeur.

11. Semelle selon la revendication 10, caractérisée en ce que la hauteur (hr) des reliefs longitudinaux (23,24) est comprise entre 0,05 et 0,5 mm à partir d'une base située entre 0 et 0,5 mm au-dessus du plan (po) de contact de la zone de séchage (30,31,32) avec un tissu à repasser.

12. Semelle selon la revendication 10 ou 11, caractérisée en ce que les reliefs longitudinaux (23) ont une forme ondulée.

13. Semelle selon l'une des revendications 10 à 12, caractérisée en ce que la frontière entre la première zone avant de vaporisation (20) et la seconde zone arrière de séchage (30) est en V, en V inversé ou en W.

## Patentansprüche

1. Dampfbügeleisensohle (10, 11, 12), die in wenigstens eine vordere Verdampfungszone (20, 21, 22) mit einer Vielzahl von Dampfausstoßöffnungen (13) und in wenigstens eine hintere Trocknungszone (30, 31, 32) ohne Dampfausstoßöffnungen unterteilt ist, wobei die Trocknungszone eine oder mehrere Rillen (33, 35, 42) aufweist, gekennzeichnet dadurch, daß ein Satz von Rillen in der Trocknungszone (30, 31, 32) die Gestalt eines Rillennetzes (33, 35) aufweist, das ein Raster von erhabenen Pflasterungen (34, 36) definiert.

2. Sohle nach Anspruch 1, gekennzeichnet dadurch, daß die Rillen eine Breite zwischen 0,1 und 2 mm bei einer Tiefe zwischen 0,005 und 1 mm aufweisen.

3. Sohle nach Anspruch 1 oder 2, gekennzeichnet dadurch, daß die Oberfläche der Pflasterungen (34, 36) zwischen 0,5 und 50 mm² beträgt.

4. Sohle nach einem der Ansprüche 1 bis 3, gekennzeichnet dadurch, daß das Rillennetz ein Raster von kreisförmigen (36) oder polygonalen (34) Pflasterungen bildet.

5. Sohle nach einem der Ansprüche 1 bis 4, gekennzeichnet dadurch, daß die Oberfläche der Pflasterungen (34, 36) in Gestalt von Erhebungen (38) im Submillimeterbereich strukturiert ist.

6. Sohle nach einem der Ansprüche 1 bis 5, gekennzeichnet dadurch, daß Rillen die Gestalt von Dampfauslaßkanälen (42) aufweisen, deren Breite zwischen 1 und 10 mm bei einer Tiefe zwischen 0,1 und 1 mm liegt.

7. Sohle nach Anspruch 6, gekennzeichnet dadurch, daß die Kanäle (42) schräg von der Mitte zum hinteren Ende der Sohle verlaufen, wo sie münden.

8. Sohle nach Anspruch 6, gekennzeichnet dadurch, daß ein zentraler Hohlraum (40) in der Mitte der Grenze zwischen der vorderen Verdampfungszone (21) und der hinteren Trocknungszone (31) ausgebildet ist und daß Kanäle (42) diesen zentralen Hohlraum mit den seitlichen oder hinteren Rändern der Trocknungszone verbinden.

9. Sohle nach einem der vorhergehenden Ansprüche, gekennzeichnet dadurch, daß die Trocknungszone (30, 31, 32) zwischen 2/3 und 1/3 der Sohle (10, 11, 12) bildet.

10. Sohle nach einem der vorhergehenden Ansprüche, gekennzeichnet dadurch, daß die vordere Verdampfungszone (20, 21, 22) ein Netz von longitudinalen Erhebungen (23, 24) zur Plättung der Fasern und zur Führung des Dampfes enthält.

11. Sohle nach Anspruch 10, gekennzeichnet dadurch, daß die Höhe (hr) der longitudinalen Erhebungen (23, 24) zwischen 0,05 und 0,5 mm ausgehend von einer Basis beträgt, die zwischen 0 und 0,5 mm über der Ebene (po) des Kontaktes der Trocknungszone (30, 31, 32) mit einem zu bügelnden Gewebe liegt.

12. Sohle nach Anspruch 10 oder 11, gekennzeichnet dadurch, daß die longitudinalen Erhebungen (23) eine gewellte Form aufweisen.

13. Sohle nach einem der Ansprüche 10 bis 12, gekennzeichnet dadurch, daß die Grenze zwischen der ersten vorderen Verdampfungszone (20) und der zweiten hinteren Trocknungszone (30) ein V, ein umgedrehtes V oder ein W bildet.

## Claims

1. A steam iron soleplate (10, 11, 12) subdivided into at least one steam-spraying front zone (20, 21, 22) provided with a plurality of steam-ejection orifices (13), and at least one drying rear zone (30, 31, 32) not provided with steam-ejection orifices, the drying zone having one or more grooves (33, 35, 42), said soleplate being characterized in that, in the drying zone (30, 31, 32), a set of grooves is in the form of an array of furrows (33, 35) defining a grid of slabs in relief (34, 36).

2. A soleplate according to claim 1, characterized in that the furrows are of width lying in the range 0.1 mm to 0.2 mm, and of depth lying in the range 0.005 mm to 1 mm.

3. A soleplate according to claim 1 or 2, characterized in that the surface area of each of the slabs (34, 36) lies in the range 0.5 mm² to 50 mm².

4. A soleplate according to any one of claims 1 to 3, characterized in that the array of furrows defines a grid of circular slabs (36) or of polygonal slabs (34).

5. A soleplate according to any one of claims 1 to 4, characterized in that the surface of each of the slabs (34, 36) is structured in the form of sub-millimeter pieces of relief (38).

6. A soleplate according to any one of claims 1 to 5, characterized in that the grooves are in the form of steam-removing channels (42) of width lying in the range 1 mm to 10 mm, and of depth lying in the range 0.1 mm to 1 mm.

7. A soleplate according to claim 6, characterized in that the channels (42) slant from the center towards the rear of the soleplate, where they open out.

8. A soleplate according to claim 7, characterized in that a central cavity (40) is provided in the middle of the border between the steam-spraying front zone (21) and the drying rear zone (31), and in that channels (42) put the central cavity in communication with the side edges or the rear edge of the drying zone.

9. A soleplate according to any preceding claim, characterized in that the drying zone (30, 31, 32) forms in the range 2/3 to 1/3 of the soleplate (10, 11, 12).

10. A soleplate according to any preceding claim, characterized in that the steam-spraying front zone (20, 21, 22) is provided with an array of fiber-crushing and steam-guiding longitudinal pieces of relief (23, 24).

11. A soleplate according to claim 10, characterized in that the height (hr) of each of the longitudinal pieces of relief (23, 24) lies in the range 0.05 mm to 0.5 mm starting from a base situated in the range 0 mm to 0.5 mm above the plane (po) in which the drying zone (30, 31, 32) is in contact with the fabric to be ironed.

12. A soleplate according to claim 10 or 11, characterized in that the longitudinal pieces of relief (23) are of undulating shape.

13. A soleplate according to any one of claims 10 to 12, characterized in that the border between the steam-spraying front first zone (20) and the drying second rear zone (30) is V-shaped, upside-down V-shaped, or W-shaped.
